# EUROPÄISCHE PATENTANMELDUNG

(11) **EP 1 422 644 A1**
(43) Veröffentlichungstag der Anmeldung: **26.05.2004**
(21) Anmeldenummer: 03024640.9
(22) Anmeldetag: 27.10.2003
(51) Int. Cl.: G06F 17/60

(54) **Verfahren zur Verrechnung von mittels eines Netzes genutzten Dienstleistungen**

(71) Anmelder: Siemens Schweiz AG, 8047 Zürich (CH)
(72) Erfinder: Emery, Jacques, 8802 Kilchberg (CH)
(74) Vertreter: Kley, Hansjörg

(57) **Zusammenfassung**

zur einfachen Verrechnung von mittels eines ersten Netzes (10) genutzten Dienstleistungen wird ein Verfahren mit folgenden Schritten angegeben:
A Für eine an einem Terminal (10) zu beziehende Dienstleistung wird eine E.164 - Telefonnummer eines Teilnehmers (21) eines zweiten Netzes (20) zugeordnet;
B vom zweiten Netz (20) erfolgt ein Verbindungsaufbau zum Teilnehmer (21) mit der genannten Telefonnummer;
C vom Teilnehmer (21) wird eine Bestätigungsnachricht zum zweiten Netz (20) übermittelt;
D vom zweiten Netz (20) erfolgt dadurch eine Freigabenachricht an das erste Netz (10), damit die zu beziehende Dienstleistung erbracht werden kann;
E in einem der genannten Telefonnummer zugeordneten Taxierungszähler erfolgt eine Verrechnung.

Auf diese Weise ist ein einfaches und sicheres Verfahren zur Verrechnung geschaffen, dass keiner vorgängigen Registrierung bedarf.

## Beschreibung

Die Erfindung bezieht sich auf ein Verfahren zur Verrechnung von mittels eines Netzes genutzten Dienstleistungen gemäss dem Oberbegriff des Patentanspruchs 1.

Die vorliegende Erfindung betrifft das Gebiet des sogenannten Micropayments. In Netzen wie z.B. dem Internet wird eine Vielzahl von Diensten und Dienstleistungen angeboten. Insbesondere für Informationsdienstleistungen besteht das Bedürfnis, nach einer einfachen Verrechnung der in Anspruch genommenen Inhalte, wie z.B. ein Zeitungsartikel, ein Eintrag einer Datenbank, usw. Dabei handelt es sich meist um so kleine Geldbeträge, dass das Versenden einer Rechnung aus Kostengründen zum vorneherein ausgeschlossen ist.

Die bekannten Verfahren beruhen darauf, dass ein Benutzer ein sogenanntes Konto beim Informationsanbieter (Content Provider) führt und ihm dann z.B. monatlich eine Rechung zugestellt wird oder monatlich mit einem Lastschriftverfahren (LSV) abgerechnet wird. Diese bekannten Verfahren sind geeignet für Dienstleistungskunden, die regelmässig Informationsdienstleistungen in Anspruch nehmen. Für Personen, die lediglich sporadisch oder nur einmalig eine kostenpflichtige Dienstleistung über ein Netzwerk wie z.B. das Internet beziehen, sind die vorgenannten Verfahren nicht praktikabel. Um dennoch kleine Geldbeträge bei einem einmaligen oder nur sehr sporadischen Bezug einer Dienstleistung verrechnen zu können sind die nachstehend genannten Verfahren entwickelt worden.

In WO 02/093513 ist ein Verfahren offenbart, dass eine einfache Abrechnung zwischen einem in einem ersten Telekommunikationsnetz (TK-Netz) beheimateten Benutzer und einem in einem zweiten TK-Netz beheimateten Dienstanbieter erlaubt. Als Schnittstelle zwischen Benutzer und TK-Netzen ist dabei vorzugsweise ein http- und ein SIP-Client vorgesehen. Bei diesem Verfahren ist nachteilig, dass besondere Sicherheitsvorkehrungen getroffen werden müssen, um den Dienstleistungskonsumenten zu identifizieren. Dies ist insbesondere dann schwierig, wenn der betreffende Konsument sich eines Client bedient, der beispielsweise hinter einer Firewall angeschlossen ist. Dieses Problem ist nur über eine vorgängige Registrierung lösbar. Dabei müssen vorgängig eine Kennung und ggf. ein Passwort vergeben werden.

Mit Hilfe einer IN-Lösung (Intelligent Network) kann über sogenannte Collect Calls eine Kostenübernahme durch den Angerufen erfolgen. Dies wird meist so implementiert, dass ein Teilnehmer (Subscriber) einem automatisch oder ereignisgesteuerten Telefonanruf erhält und ihm auf diese Weise ein Dienst angeboten wird. Durch eine meist mündliche Bestätigung der angerufenen Person wird anschliessend die Dienstleistung erbracht bzw. freigegeben. Bei diesen Collect Calls kann der Preis einmalig sein (eine Art Setup-Gebühr) oder zeitabhängig. Letzteres wird beispielsweise dann der Fall sein, falls die Beratungs- oder Auskunftsdienstleistungen durch eine Agentin eines Call-Centers erbracht werden. Die Fakturierung solcher Collect Calls erfolgt über die Telefonrechnung des betreffenden Mobil- oder Fixnetzteilnehmers. Diese Lösung ist jedoch nicht geeignet, wenn die zu erbringende Dienstleistung über ein Netzwerk wie z.B. dem Internet erbracht wird.

Im folgenden Kontext wird nicht genau unterschieden zwischen einem Dienst im Sinne der Telekommunikation und einer Beratungs- oder Informationsdienstleistung. Die vorgenannten zwei Dienste bzw. Dienstleistungen werden nachfolgend unter dem Begriff Dienstleistung subsummiert.

Der vorliegenden Erfindung liegt die Aufgabe zugrunde, ein Verfahren zur Verrechnung von mittels eines Netzwerks genutzten Dienstleistungen anzugeben, dass in der Handhabung sehr einfach und sicher ist sowie für den sporadischen Bezug einer Dienstleistung geeignet ist.

Diese Aufgabe wird das im Patentanspruch 1 angegebene Verfahren gelöst.

Durch die erfindungsgemässe Lösung, wonach
A für eine zu beziehende Dienstleistung wird eine Kommunikationsadresse eines zweiten mit dem zweiten Netzwerk verbindbaren Terminals zugeordnet;
B vom zweiten Netzwerk erfolgt ein Verbindungsaufbau zum zweiten Terminal mit der im Verfahrensschritt A zugeordneten Kommunikationsadresse;
C vom zweiten Terminal wird eine Bestätigungsnachricht zum zweiten Netzwerk übermittelt;
D vom zweiten Netzwerk erfolgt aufgrund der Bestätigungsnachricht eine Freigabenachricht an das erste Netzwerk, damit die zu beziehende Dienstleistung erbracht werden kann;
E in einem der genannten Kommunikationsadresse zugeordneten Taxierungszähler erfolgt eine Verrechnung;
ist ein Verfahren geschaffen, das unmittelbar vor dem Bezug einer Dienstleistung eine einfache Identifizierung des Konsumenten erlaubt und eine besondere Rechnungsstellung überflüssig macht.

Vorteilhafte Ausgestaltungen der Erfindung sind in weiteren Ansprüchen angegeben.
i) Dadurch dass
   dass das erste Netz und das zweite Netz über einen IN-Knoten gekoppelt sind;
   können die mit IN möglichen Dienste an die verschiedensten Anforderungen bezüglich Verrechnung angepasst werden, wie z.B. abhängig vom Ort oder Land des Teilnehmers. Dies ist von Bedeutung bei der steuerlichen Behandlung der Rechnungspositionen (Patentanspruch 5).
ii) Dadurch dass
   innerhalb des leitungsvermittelten Netzes geprüft wird, ob für die E.164-Nummer eine Berechtigung vorliegt, gemäss der dem zugeordneten Taxierungszähler ein Collect Call belastet werden darf;
   ist ein missbräuchlicher Bezug einer Dienstleistung bzw. eine Verrechnung an einen Dritten ausgeschlossen (Patentanspruch 6).
iii) Dadurch dass
   im Verfahrensschritt C ein Codewort als Bestätigungsnachricht vorgesehen ist, wobei im Verfahrensschritt A das Codewort am ersten Terminal bei der Selektion der zu beziehenden Dienstleistung ausgegeben wird und zum zweiten Netzwerk übermittelt wird;
   ist eine zusätzliche Verbindlichkeit der Zustimmung einer kostenpflichtigen Dienstleistung gewährleistet, so dass ein Teilnehmer im Nachhinein den betreffenden Bezug der Dienstleistung nicht bestreiten kann (Patentanspruch 7).

Die Erfindung wird nachfolgend anhand einer Zeichnung beispielsweise näher erläutert. Dabei zeigen:
- Figur 1: Logische Sicht eines ersten und zweiten Netzwerkes zur Darstellung der Wirkungsweise des erfindungsgemässen Verfahrens;
- Figur 2: Detailliertere Darstellung der verschiedenen angewendeten Protokolle auf verschiedenen Schichten zur Erläuterung der Wirkungsweise des erfindungsgemässen Verfahrens.

Zur besseren Verständlichkeit der Erläuterung eines Ausführungsbeispieles wird in dieser Schrift folgende Nomenklatur verwendet:
a) Die Begriffe Netze und Netzwerke werden synonym verwendet.
b) Begriff "Erstes Netz" 10:
   Der Begriff "Erstes Netz" 10 beinhaltet im folgenden ein auf dem Internetprotokoll basierendes Netz 10. Zur leichteren Verständlichkeit ist im folgenden dabei auch von einem IP-Netz die Rede.
c) Begriff "Zweites Netz 20"
   Der Begriff "Zweites Netz" 20 steht für ein leitungsvermitteltes Netz, das oft auch als PSTN/ISDN-Netz bezeichnet wird. Dieses leitungsvermittelte Netz 20 ist aber nicht auf den engen Begriff PSTN bzw. ISDN beschränkt, sondern schliesst ein mobiles Netz mit einem leitungsvermittelten Dienst wie z.B. GSM mit ein. Daher ist oft auch von einem GSTN-Netz die Rede. In diesem Sinne steht daher ein Netz 20 im folgenden stets für ein leitungsvermitteltes Netz 20.
d) Begriffe Terminal 11 und Terminal 21:
   Ein Terminal steht für ein Endgerät des betreffenden ersten oder zweiten Netzes, das abhängig von den verfügbaren Diensten als gewöhnlicher Telefonapparat 21 , als Komforttelephonapparat 21, als mobiles Telefongerät 21 , als digitaler Assistant 11 oder als Personalcomputer 11 ausgeführt sein kann.

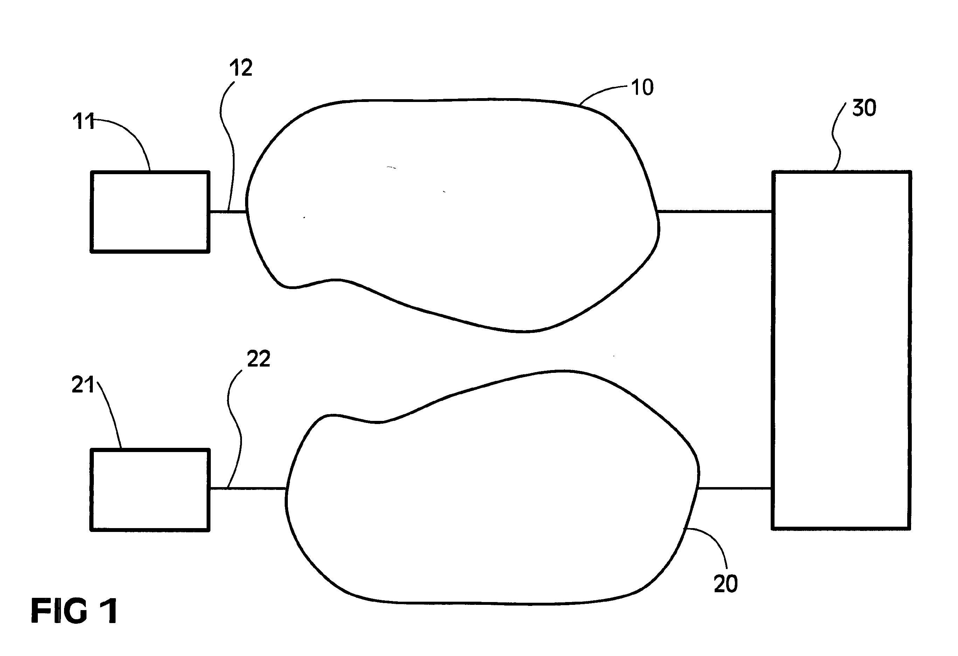

Die Figur 1 stellt eine logische Sicht eines ersten Netzwerkes 10 und eines zweiten Netzwerkes 20 zur Darstellung der Wirkungsweise des erfindungsgemässen Verfahrens dar. An die betreffenden Netze 10 und 20 sind über ein Zugangsnetz 12 bzw. 22 je ein Terminal 11 bzw. 21 zugeordnet. In einer bevorzugten Ausführungsform stellt ein Terminal 21 einen Telefonapparat und ein Terminal 11 einen Personalcomputer oder einen digitalen Assistenten dar. Die Art des Anschlusses aus einer Schicht 1 - Betrachtung der Terminals 11, 21 an die betreffenden Netze 10 und 20 wird an dieser Stelle offen gelassen. Die beiden Netze 10 und 20 sind über eine Koppeleinheit 30 miteinander verbunden, die die Verbindung zwischen Sprach- und Datenapplikationen leistet. Dies kann beispielsweise durch eine Koppeleinheit des Typs hiQ 4000 von Siemens AG vorgenommen werden.

Mit einer Koppeleinheit des Typs hiQ 4000 ist der Dienst "easyConnected" als Stand der Technik implementiert. Diesem Dienst liegt die in Figur 1 gezeigte Konfiguration vor, wobei das Terminal 11 zusätzlich noch über eine Firewall mit dem öffentlichen Internet gekoppelt sein kann. Ein Teilnehmer kann an seinem Terminal 11 über ein markgängiges Mail-Programm wie beispielsweise Outlook einen Sprachverbindungswunsch initiieren, beispielsweise durch ein Icon "CALL". Über die Einheit HiQ 4000 wird dabei im TDM-Netz ein Verbindungsaufbau von einem der Terminal 11 zugeordneten Telefonapparat 21 zu einem anderen Teilnehmer des TDM Netzes 20 aufgebaut. Der Vorteil dieses Dienstes liegt darin, dass keine physische Schnittstelle zwischen Terminal 11 und Telefonapparat 21 geleistet werden muss. Eine weitere Funktionalität der Koppeleinheit des Typs hiQ 4000 besteht im Dienst "Call Waiting Internet". Für Teilnehmer mit einer einzigen Zugangsleitung a/b terminiert dieser Dienst eingehende Telefonanrufe während einer sogenannten Internet-Sitzung. Dadurch stösst der anrufende Teilnehmer nicht mehr auf eine besetzte Leitung und dem angerufene Teilnehmer können so eingegangene Anrufe signalisiert werden. Dadurch wird die Erreichbarkeit für den Sprachdienst erhöht, ohne dass der angerufene Teilnehmer sich eine reale zweite Leitung bzw. Verbindung leisten muss.

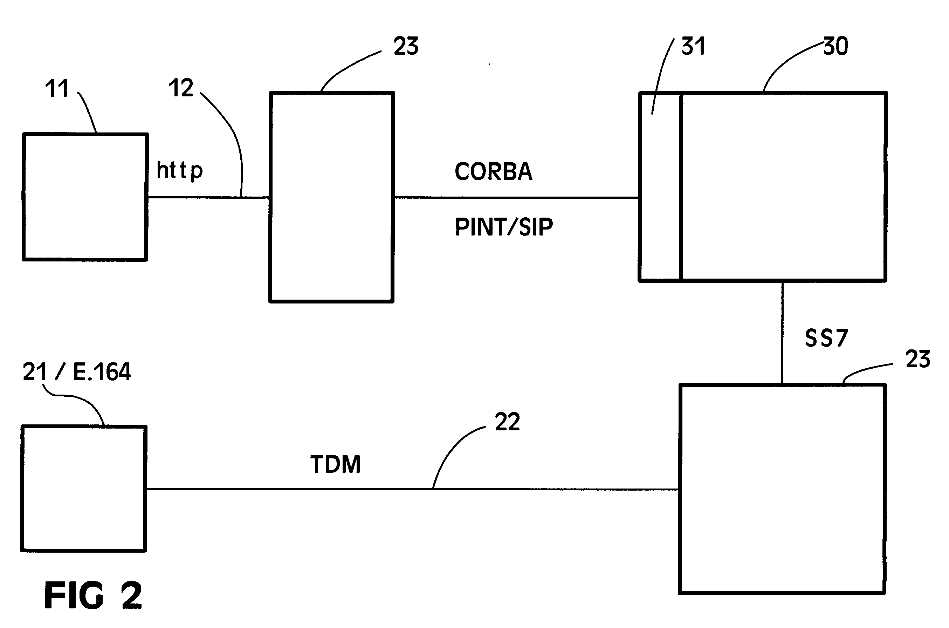

Figur 2 stellt die verschiedenen angewendeten Protokolle auf den verschiedenen Schichten zur Erläuterung eines Ausführungsbeispiels dar ist unabhängig von der in Figur 1 gezeigten Koppeleinheit 30 des Typs hiQ 4000.

Die Wirkungsweise des erfindungsgemässen Verfahrens zur Verrechnung einer zur beziehenden Dienstleistung beruht auf folgenden Verfahrensschritten:
A Ein Nutzer bezeichnet von einem Internet Provider 23 über das Protokoll http eine zu beziehende Dienstleistung. Damit diese Dienstleistung unter Verrechnung einer Gebühr erbracht werden kann, wird der Nutzer aufgefordert, an seinem Terminal 11 eine Kommunikationsadresse zur Bestätigung der Bestellung anzugeben. Diese Kommunikationsadresse ist eine E.164-Telefonnummer eines ihm zugänglichen Apparates 21, der am Festnetz PSTN/ISDN angeschlossen oder am Mobilnetz GSM eingeloggt ist. Diese Telefonnummer wird nun über das Protokoll PINT/SIP über ein Gateway 31 einem IN-Knoten 30 übermittelt. Alternativ könnte die vorgenannte Telefonnummer auch über eine CORBA-Schnittstelle einer Koppeleinheit 30 des Typs hiQ 4000 übermittelt werden.
B Von der Koppeleinheit 30 wird über das Signalisiersystem SS7 in der Anschlusszentrale 23 ein Ruf an den Teilnehmer 21 ausgelöst.
C Der potentielle Nutzer 21 der zu beanspruchenden Dienstleistung wird über einen Normsprechtext aufgefordert, für den Bezug der Dienstleistung eine bestimmte Taste oder Tastenfolge zu drücken, z.B. die Taste "1". Dieser Tastendruck wird als DTMF-Signal der Anschlusszentrale 23 übermittelt, die das empfangene zwei Frequenzen enthaltende Tonsignal auswertet. Anschliessend wird die Information zu diesem Tastendruck in einem Informationselement gemäss dem Signalisiersystem SS7 dem IN-Knoten 30 übermittelt. Eine solche ein oder mehrere Tonsignale repräsentierende Information gilt dabei als Bestätigungsnachricht an das zweite Netzwerk 20 bzw. an den Internet Content Provider 23.
D Im Falle der Übereinstimmung des der Taste "1" zugeordneten Tonsignals bzw. der dieses Signal repräsentierenden Information wird rückwärts über das Protokoll PINT/SIP oder über eine CORBA-Schnittstelle beim Internet Content Provider 23 eine als Freigabenachricht ausgebildete Meldung übermittelt. Aufgrund des Empfangs dieser Freigabenachricht wird vom Internet Content Provider 23 die zu beziehende Dienstleistung freigegeben und in der jeweiligen Form dem Nutzer zugänglich gemacht.
E Vom IN-Knoten erfolgt eine Taxierungsmeldung an die Anschlusszentrale 23, der ein Taxierungszähler der betreffenden Rufnummer zugeordnet ist. Gemäss den Usanzen des Netzwerkbetreibers des Netzes 20 erfolgt eine Verrechnung in periodischer Form an den Teilnehmer mit der genannten E.164-Nummer. Durch ein Postprocessing auf der im Taxierungszähler gespeicherten Taxrecords kann der Geldbetrag einer Erfassungsperiode ermittelt werden, der dem oder den betreffenden Internet Content Providern vom Netzwerkbetreiber zu überweisen ist. Möglich ist auch ein Verfahren, wonach der Internet Content Provider 23 dem Netzwerkbetreiber eine Rechnung stellt für auf diese Weise über das zweite Netz 20 erbrachte Dienstleistungen.

Wie in Figur 2 dargestellt, kann zwischen dem Content Provider 23 und dem Gateway 31 anstelle des Protokolls PINT/SIP auch das Protokoll CORBA eingesetzt werden.

Bei einer bevorzugten Ausführungsform der vorliegenden Erfindung wird vor Ausführung des Verfahrensschrittes B in einer Datenbank des Netzwerkbetreibers des zweiten Netzes 20 geprüft, ob für die angegebene E.164 - Nummer ein Collect Call ausgeführt werden darf. Besonders bei sogenannten Durchwahlnummern DDI muss dies speziell geprüft werden, da in den meisten Fällen die Fakturierung pro Durchwahlnummer in einer einzigen Rechnung zulasten einer juristischen Person erfolgt. Auch sogenannte Residental Customers können durchaus ein Interesse haben, dass solche kostenpflichtige Collect Calls für ihren Anschluss nicht erlaubt sind. Diese Prüfung ist auch erforderlich, um eine Verrechnung auf eine öffentliche Telefonkabine/Sprechstelle auszuschliessen.

In einer kommerziellen Ausgestaltung des erfindungsgemässen Verfahrens kann zusätzlich oder alternativ zur vorgenannten Prüfung vorgesehen sein, dass ein potentieller Nutzer sich einmalig registrieren lassen muss, beispielsweise durch einen Anruf auf eine IN-Nummer des betreffenden Content Providers. Dies kann lediglich mit einem Anruf auf ein sogenanntes IVR-System geschehen. Zusätzlich kann vorgesehen werden, dass dem betreffenden Teilnehmer ein Codewort oder eine Kennung der oben genannten Art mitgeteilt wird.

Die im Verfahrensschritt C angegebene Bestätigungsnachricht kann auch so ausgestaltet sein, dass jeweils bei der Eingabe seiner E.164 - Nummer seitens des Content Providers zunächst ein Codewort an das erste Terminal 11 übermittelt wird und dieses dann vom Konsumenten am Telefonapparat 21 nach erfolgtem Verbindungsaufbau mittels der Tastatur an das zweite Netzwerk 20 zu übermitteln ist. Das gleiche Codewort wird vom Content Provider auch an den IN-Knoten 30 bzw. an die Open Service Plattform 30 übermittelt und dort nach erfolgtem Empfang auf Übereinstimmung geprüft.

Die Erfindung ist nicht an die in dieser Schrift angegebenen Protokolle PINT/SIP oder an eine CORBA-Schnittstelle gebunden, sondern kann auch mit anderen Protokollen implementiert werden.

### Liste der verwendeten Bezugszeichen und Abkürzungen

- 10: erstes Netzwerk; internetbasierendes Netzwerk
- 11: erstes Terminal, Personalcomputer
- 12: Zugangsnetz zum ersten Terminal
- 13: Content Provider, Webserver
- 20: zweites Netzwerk; leitungsvermittelndes Netzwerk
- 21: zweites Terminal, Telefonapparat, fix oder mobiler Telefonapparat
- 22: Zugangsnetz zum zweiten Terminal
- 23: Anschlusszentrale
- 30: Koppeleinheit, Open Service Plattform, IN-Knoten umfassend SCP und SSP
- 31: Gateway

- CORBA: Common Oriented Request Broker Architecture
- DDI: Direct Dialling In
- DTMF: Dual Tone Multi Frequency
- GSTN: Global Switched Telephone Network
- http: Hyper Text Transfer Protocol
- IN: Intelligent Network
- IVR: Interactive Voice Response
- PINT: PSTN/Internet Interworking Service, nach RFC 2848
- PSTN: Public Switched Telecommunication Network
- SCP: Service Control Point, im Sinne von IN
- SSP: Service Switching Point, im Sinne von IN
- SS7: Signalisiersystem Nummer 7
- TDM: Time Division Multiplex
- XML: Extensible Markup Language

## Patentansprüche

1. Verfahren zur Verrechnung von einer mittels eines ersten Netzes (10) genutzten Dienstleistung, wobei über ein erstes Terminal (11) Dienstleistungen selektiert werden können und das erste Terminal (11) mit dem ersten Netz (10) verbunden ist und das erste Netz (10) mit einem zweiten Netz (20) gekoppelt ist;
**gekennzeichnet durch** die Verfahrensschritte:
A für eine zu beziehende Dienstleistung wird eine Kommunikationsadresse (E.164) eines zweiten mit dem zweiten Netz (20) verbindbaren Terminals (21) zugeordnet;
B vom zweiten Netz (20) erfolgt ein Verbindungsaufbau zum zweiten Terminal (21) mit der im Verfahrensschritt A zugeordneten Kommunikationsadresse (E.164);
C vom zweiten Terminal (21) wird eine Bestätigungsnachricht zum zweiten Netz (20) übermittelt;
D vom zweiten Netz (20) erfolgt aufgrund der Bestätigungsnachricht eine Freigabenachricht an das erste Netz (10), damit die zu beziehende Dienstleistung erbracht werden kann;
E in einem der genannten Kommunikationsadresse (E.164) zugeordneten Taxierungszähler erfolgt eine Verrechnung.

2. Verfahren nach Anspruch 1;
**dadurch gekennzeichnet, dass**
das erste Netz (10) internetbasierend ist und dass das zweite Netz (20) ein leitungsvermitteltes Netz (TDM) ist.

3. Verfahren nach Anspruch 2;
**dadurch gekennzeichnet, dass**
die im Verfahrensschritt A zugeordnete Kommunikationsadresse eine E.164-Nummer ist.

4. Verfahren nach Anspruch 3,
**dadurch gekennzeichnet, dass**
dass im Verfahrensschritt B ein Collect Call ausgeführt wird.

5. Verfahren nach Anspruch 3 oder 4;
**dadurch gekennzeichnet, dass**
dass das erste Netz (10) und das zweite Netz (20) über einen IN-Knoten (30) gekoppelt sind.

6. Verfahren nach einem der Ansprüche 3 bis 5;
**dadurch gekennzeichnet, dass**
innerhalb des leitungsvermittelten Netzes geprüft wird, ob für die E.164-Nummer eine Berechtigung vorliegt, gemäss der dem zugeordneten Taxierungszähler ein Collect Call belastet werden darf.

7. Verfahren nach einem der Ansprüche 1 bis 6;
**dadurch gekennzeichnet, dass**
im Verfahrensschritt C ein Codewort als Bestätigungsnachricht vorgesehen ist, wobei im Verfahrensschritt A das Codewort am ersten Terminal (11) bei der Selektion der zu beziehenden Dienstleistung ausgegeben wird und zum zweiten Netz (20) übermittelt wird.

8. Verfahren nach Anspruch 7;
**dadurch gekennzeichnet, dass**
im Verfahrensschritt D eine Freigabenachricht nur dann übermittelt wird, wenn vorgängig Übereinstimmung von dem im Verfahrensschritt A vom ersten Netz (10) übermittelten Codewort mit dem im Verfahrensschritt C übermittelten Codewort festgestellt wurde.
